# EUROPEAN PATENT SPECIFICATION

(11) **EP 2 199 338 B1**
(45) Date of publication and mention of the grant of the patent: **17.10.2012**
(21) Application number: 10158921.6
(22) Date of filing: 10.05.2005
(51) Int. Cl.: B01F 17/00, C08G 59/50, C09D 11/00, C09D 11/02

(54) **Polyetheralkanolamine dispersants**
Kammartige Polyetheralkanolamine in Tinten
Polyétheralkanolamines en forme de peigne dans des encres

(30) Priority: 13.05.2004 US 570600 P
(43) Date of publication of application: 23.06.2010
(62) Divisional of application: 05749266.2
(73) Proprietor: Huntsman Petrochemical LLC, The Woodlands, TX 77380 (US)
(72) Inventor: Klein, Howard P., Austin, TX 78759 (US); Whewell, Christopher J., Georgetown, TX 78628 (US)
(74) Representative: Van Steenlandt, Wim August Maria

## Description

### Background Information

The present invention relates generally to surfactants, and more particularly to polyetheralkanolamine surfactants that are derived from epoxy resins and monofunctional, amine-terminated polyethers.

There is a class of polymers which are sometimes referred to by those skilled in the art as "comb polymers", because such polymers comprise a relatively long and hydrophobic or hydrophilic backbone having a plurality of branches appended to the backbone, wherein the branches resemble the teeth of a comb. The branches themselves may also be hydrophobic or hydrophilic. In these comb polymers, the chemical nature of the base of the comb is sometimes significantly different from the chemical nature of the branching teeth of the comb. In such instances, the polymers may be surface-active and hence useful as dispersive polymers in a wide variety of end uses.

U.S. Patent No. 6,506,821 B1 discloses epoxy resins obtained by reacting aromatic polyepoxides with polyoxyalkyleneamines in an equivalent ratio (epoxy equivalent : amine equivalent) of between 3.6 :1 and 10:1. Since the epoxide group content of these resins is bountiful, they are insoluble in water and are not suitable as pigment dispersants. U.S. Application No. 20050020735 discloses a dispersant prepared by reacting: 1) monofunctional or polyfunctional aromatic epoxides; with 2) polyoxyalkylene monoamines, wherein from 90% to 100% of the epoxide groups are reacted. Document US 6 077 884 relates to aqueous dispersions of epoxy resins comprising water and water-soluble emulsifiers (see column 13, examples I.5 and I.6), which are epoxy-amine adducts formed by reacting polyglycidylether of bisphenol A or of Phenol-Novolac with polyalkylene glycol monoamines (Jeffamine M-1000 and Jeffamine M-2070). The reaction products are epoxy functional water-soluble dispersing agents represented at columns 5-8 of US 6 077 884. In the examples I.5 and I.6 of US 6 077 884, the epoxy/amine equivalent ratio is 3,52. The polymers of the present invention are also obtained by reacting aliphatic polyepoxides with monofunctional amine-terminated polyethers. However, we have unexpectedly found that when an excess of epoxy resin is utilized that the viscosities of pigmented formulations are far lower than what one of ordinary skill in the art would expect.

The present invention relates to a method to provide a water-soluble dispersive polymers defined by the structure below, and including mixtures thereof: 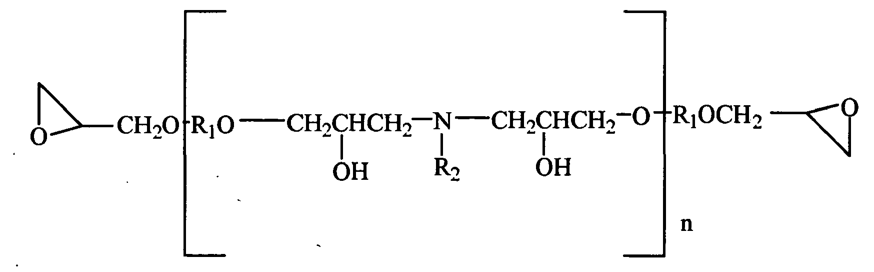 in which R₁ is an aromatic hydrocarbyl group; R₂ being any alkoxylated hydrocarbyl group defined by the structure: 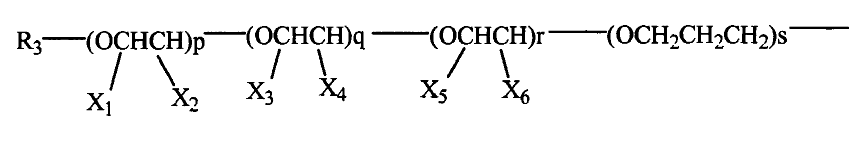 in which R₃ is selected from the group consisting of hydrogen, and any C₁ to about C₂₄ hydrocarbyl group; X₁, X₂, X₃, X₄, X₅, and X₆ in each occurrence are independently selected from the group consisting of: hydrogen, methyl and ethyl, subject to the proviso that at least one of the two X groups that are attached to the same alkoxy unit are hydrogen, p, q, and r may each independently be any integer between zero and about 100, including zero, subject to the proviso that at least one of p, q, and r is not zero; and wherein n is any integer between 2 and 20 and s is either 0 or 1, said water-soluble dispersant is obtained by reacting the primary amine R₂-NH₂ with a polyepoxy of general formula 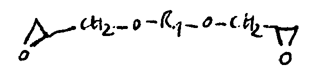 the epoxy-to-amine equivalent ratio being any ration between 1,10:1 to 2,5:1 and the ratio of exoxy groups to hydrogens attached to the nitrogen atom of the primary amine being in the range of between 1,1:1 to 2,5:1 and from 40% to 75% of the epoxy groups of the starting material are reacted.

### Detailed Description

A comb polymer may be prepared according to one embodiment of the present invention by reacting a monofunctional, amine-terminated polyether with a glycidyl ether of a polyol. The product resulting from such a process may be conveniently referred to as a polyetheralkanolamine. According to one preferred embodiment of the invention, the amine-terminated polyether (ATP) reactant is present in an amount sufficient to ensure that the total number of reactive hydrogen atoms on the nitrogen atom of the amine(s) present is at least stoichiometrically equal to the amount of epoxide groups present in all glycidyl ethers of a polyols present.

In another broad respect, the present invention provides a process that comprises reacting a monofunctional, amine-terminated polyether ("ATP") with a glycidyl ether of a polyol. A process according to another embodiment of the invention comprises reacting one or more epoxy resins with an ATP having a hydrophilic backbone at elevated temperature, to afford a thermoplastic polyethanolamine having many hydrophilic branches. The polymer molecular weight and physical properties of such products may be controlled by selection of raw materials, the ratio of the two starting materials, and the mixing temperature.

A polyethanolamine composition of the present invention may be prepared by reaction of a diglycidyl ether of Bisphenol A (or Bisphenol F) with a mono-functional polyetheramine having a molecular weight of 250 to 3500. The polyether (i.e., polyoxyalkylene) chain may be based on a polymer of ethylene oxide, propylene oxide, butylene oxide, or any combination of these materials, and may also include materials derived from cyanoethylated polyoxyalkylene glycols.

A reaction according to the invention, for forming the water-soluble comb materials herein described is preferably conducted at any temperature in the range of between about 50°C and 150° C. Reaction times vary independently, depending upon the nature of the reactants (i.e., degree of steric hindrance present) and may be any time between about 2 and about 10 hours, with the preferred reaction time being dependent on the nature of the starting materials as well.

A comb polymer prepared in accordance with one preferred embodiment of the invention is water-soluble to a degree of at least 5% by weight of the polymer in water. A comb polymer in another embodiment is preferably soluble in water to a degree of at least 10 % by weight of the polymer in water. A comb polymer in one embodiment is preferably soluble in water to a degree of at least 15% by weight of the polymer in water. A comb polymer in another embodiment is preferably soluble in water to a degree of at least 20 % by weight of the polymer in water. A comb polymer in one embodiment is preferably soluble in water to a degree of at least 25% by weight of the polymer in water. A comb polymer in another embodiment is preferably soluble in water to a degree of at least 30 % by weight of the polymer in water. A comb polymer in one embodiment is preferably soluble in water to a degree of at least 35% by weight of the polymer in water. A comb polymer in another embodiment is preferably soluble in water to a degree of at least 40 % by weight of the polymer in water. A comb polymer in one embodiment is preferably soluble in water to a degree of at least 45% by weight of the polymer in water. A comb polymer in another embodiment is preferably soluble in water to a degree of at least 50 % by weight of the polymer in water. A comb polymer in yet a further embodiment is miscible with water in all proportions.

A general reaction scheme for the preparation of a comb polymer according to one embodiment of the present invention is: 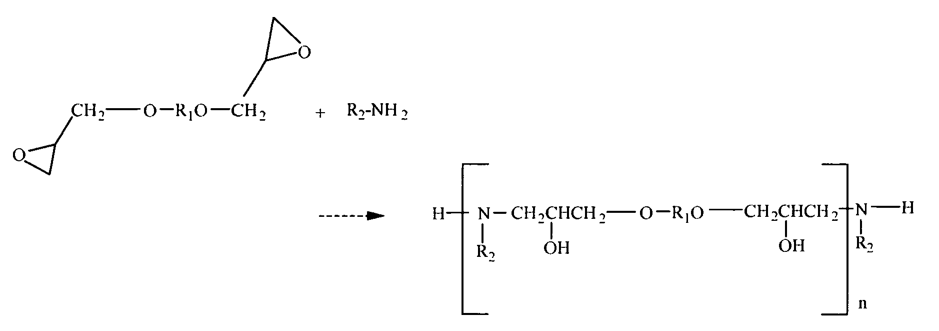 in which an epoxy resin containing at least two epoxy functional end groups is reacted with a primary amine. R₁ in the above reaction may be any C₁-C₁₀₀ hydrocarbyl group; thus the epoxy reactant may be any epoxy resin of at least a functionality of two, and includes without limitation the materials listed under the glycidyl ethers section of this specification. Further, it is easy for one of ordinary skill in the art to control the relative amounts of the raw materials used in forming a dispersant according to the present invention. In one embodiment, there is an excess of epoxy resin present, which results in dispersant molecules which are end-capped with epoxy groups. In another embodiment, there is excess amine used in forming the dispersants, which results in dispersant molecules which are end-capped with amine groups.

In the above equation, n is any integer between about 1 and about 50; R₂ may be any hydrocarbyl group which includes as a part of its molecular structure a portion containing at least two alkoxy groups linked to one another, i.e., the group R₂ may be a group: 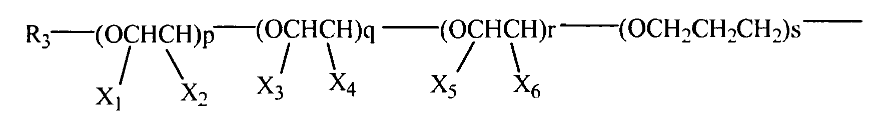 in which R₃ is any C₁ to about C₂₄ hydrocarbyl group; X₁, X₂, X₃, X₄, X₅, and X₆ in each occurrence are independently selected from the group consisting of: hydrogen, methyl and ethyl, subject to the proviso that at least one of the two X groups that are attached to the same alkoxy unit are hydrogen, p, q, and r may each independently be any integer between zero and about 100, including zero, subject to the proviso that at least one of p, q, and r is not zero, and s = 0 or 1.

### The Amine Component

Such a group R₂ as specified above may be incorporated into a polymeric dispersant of the invention by reaction of an amine having the structure: 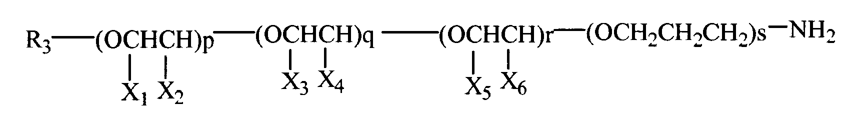 in which the variables are as defined above, with an epoxy resin having at least di-functionality, as previously specified. Thus, the above structures include R₂ groups that include, without limitation, both random and block polymers and co-polymers of any one or more of the following, either alone or mixed with one another in any proportion: ethylene oxide, propylene oxide, and butylene oxide. According to one preferred form of the invention, the molecular weight of the amine reactant is any molecular weight between about 100 and 12,000. In one preferred embodiment, amine-terminated polyethers have a molecular weight of from about 1,000 to about 3,000. In another embodiment, the amine-terminated polyethers have a molecular weight in the range from about 250 to about 3500. In a further embodiment, the molecular weight is from about 1500 to about 2000.

In cases where mixtures of such amines are employed to produce a polymer provided herein, the preferred molecular weight will in reality be an average molecular weight of all amines present, as it is recognized by those skilled in the art that the production of such alkoxylated amines inherently results in the production of a mixture of amines, by the nature of the process.

Thus, the mono-amine-functional, amine-terminated polyethers used in this invention include without limitation, those marketed by Huntsman LLC of The Woodlands, Texas under the trademarks JEFFAMINE® and SURFONAMINE®, as well as analogous compounds offered by other companies comprising polyoxyalkylenated primary amines. Suitable monoamines include JEFFAMINE® M-1000, JEFFAMINE® M-500, JEFFAMINE® M-600, JEFFAMINE® M-2070, and JEFFAMINE® M-2005. JEFFAMINE® M-1000, M-2070, and M-2005 have the following structures: 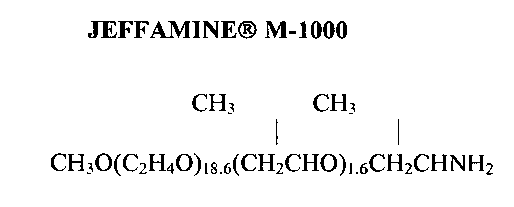 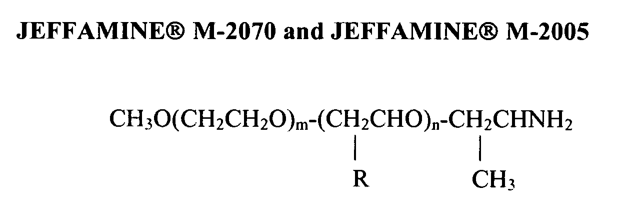 where R = H or CH₃, m is from about 3 to 32, and n is from about 10 to 32. While these compounds are methoxy terminated, the amine-terminated polyethers used in the practice of this invention can be capped with other groups where the methyl group of the methoxy group is replaced with a higher hydrocarbon such as ethyl, propyl, butyl or any substituent up to about 18 carbons, including substituents. The amine termination is typically a primary amine group. Additional representative non-limiting examples of suitable amine-terminated polyethers for use in the practice of this invention include SURFONAMINE® B-60, a 600 molecular weight methyl capped amine having a PO/EO ratio of 9/1; SURFONAMINE® L-100, a 1000 molecular weight methyl capped amine having a PO/EO ratio of 3/19; SURFONAMINE® B-200, a 2000 molecular weight methyl capped amine having a PO/EO ratio of 29/6; SURFONAMINE® L-207, a 2000 molecular weight methyl capped amine having a PO/EO ratio of 10/31; SURFONAMINE® L-300, a 3000 molecular weight methyl capped amine having a PO/EO ratio of 8/58; SURFONAMINE® B-30, a 325 molecular weight C₁₃ alkyl capped amine having two to three PO groups; and SURFONAMINE® B-100, a 1004 molecular weight nonyl phenyl capped amine having 13.5 parts PO.

Suitable polyether blocks from which amine-terminated polyethers may be made from include polyethylene glycol, polypropylene glycol, copolymers of polyethylene glycol and polypropylene glycol, poly(1,2-butylene glycol), and poly(tetramethylene glycol). The glycols can be aminated using well known methods to produce the amine-terminated polyethers. Generally, the glycols are prepared from ethylene oxide, propylene oxide or combination thereof using well known methods such as by a methoxy or hydroxy initiated reaction. By varying the amounts of EO and/or PO, the hydrophilicity of the resulting products can be varied. When both ethylene oxide and propylene oxide are used, the oxides can be reacted simultaneously when a random polyether is desired, or reacted sequentially when a block polyether is desired.

In one embodiment of the present invention, the amine-terminated polyethers are prepared from ethylene oxide, propylene oxide or combinations thereof. Generally, when the amine-terminated polyether is prepared from ethylene oxide, propylene oxide or combinations thereof, the amount of ethylene oxide on a molar basis is greater than about 50 percent of the amine-terminated polyether, preferably greater than about 75 percent and more preferably greater than about 90 percent. Diamines and triamines may, in one embodiment of this invention, be excluded from the composition. Similarly, functional groups, such as hydroxy groups, other than ether linkages and amine groups may be absent from the amine-terminated polyethers. The monofunctional amine-terminated amines used in the practice of this invention can be prepared using well known amination techniques such as described in U.S. 3,654,370; U.S. 4,152,353; U.S. 4,618,717; U.S. 4,766,245; U.S. 4,960,942; U.S. 4,973,761; U.S. 5,003,107; U.S. 5,352,835; U.S. 5,422,042; and U.S. 5,457,147. Generally, the monofunctional amine-terminated amines are made by aminating a polyether monol with ammonia in the presence of a catalyst such as a nickel containing catalyst such as a Ni/Cu/Cr catalyst.

Especially preferred amine-terminated polyethers have a molecular weight of from about 1,000 to about 3,000. (Unless otherwise specified herein, all molecular weights are expressed in atomic mass units ("a.m.u.")). While these particular materials are methoxy terminated, the amine-terminated polyethers used in practice of this invention can be capped with any other groups in which the methyl group of the methoxy group is replaced with a hydrogen or higher hydrocarbon such as ethyl, propyl, butyl, etc., including any hydrocarbyl substituent which comprises up to about 18 carbons. It is especially preferred that the amine termination is a primary amine group. Thus, mono-functional amine-terminated polyethers useful in accordance with one embodiment of the present invention may have the general structure: 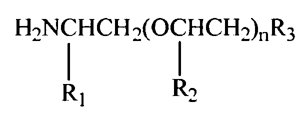 in which R₁ and R₂ are each independently selected from the group consisting of: hydrogen and any C₁ to C₄ hydrocarbyl group; R₃ is independently selected from the group consisting of: hydrogen, methyl, methoxy, ethoxy, and hydroxy; and wherein n is any integer in the range of between about 5 and 100, and including mixtures of isomers thereof. Such materials are available from Huntsman LLC of Houston, Texas in the highest quality and batch-to-batch consistency available in the marketplace.

### The Glycidyl Ether Component

The glycidyl ethers of polyols useful in providing a composition according to the present invention are generally known as "epoxy resins" which include various epoxy resins including conventional, commercially-available epoxy resins. In addition, mixtures including any two or more epoxy resins may be employed in any ratio of combination with one another to provide a mixture with which a primary amine as set forth herein may be reacted. In general, the epoxy resins can be glycidated resins, cycloaliphatic resins, epoxidized oils and so forth. The glycidated resins are frequently formed as the reaction product of a glycidyl ether, such as epichlorohydrin, and a bisphenol compound such as bisphenol A. C₂-C₂₈ alkyl glycidyl ethers; C₂-C₂₈ alkyl-and-alkenyl-glycidyl esters; C₁-C₂₈ alkyl-, mono- and poly-phenol glycidyl ethers; polyglycidyl ethers ofpyrocatechol, resorcinol, hydroquinone, 4-4'-dihydroxydiphenyl methane (or bisphenol F), 4,4'-dihydroxy-3,3'-dimethyldiphenyl methane, 4,4'-dihydroxydiphenyl dimethyl methane (or bisphenol A), 4,4'-dihydroxy-3,3'-dimethyldiphenyl propane, 4,4'-dihydroxydiphenyl sulfone, and tris (4-hydroxyphenyl) methane; polyglycidyl ethers of NOVOLAC® resins; polyglycidyl ethers of diphenols obtained by esterifying ethers of di-phenols obtained by esterifying salts of an aromatic hydrocarboxylic acid with a dihaloalkane or dihalogen dialkyl ether; polyglycidyl ethers of polyphenols obtained by condensing phenols and long chain halogen paraffins containing at least two halogen atoms; N,N'-diglycidylaniline; 4-glycidyloxy-N,N'-diglycidyl aniline; N,N'-dimethyl-N,N'-diglycidyl-4,4'-diaminodiphenyl methane; N,N,N',N'-tetraglycidyl-4,4'-diaminodiphenyl methane; N,N'-diglycidyl-4-aminophenyl glycidyl ether; and combination thereof. Commercially-available epoxy resins that can be used in the practice of this invention include but are not limited to ARALDITE® GY6010 resin (Huntsman Advanced Materials), ARALDITE® 6010 resin (Huntsman Advanced Materials), EPON® 828 resin (Resolution Polymers), and DER® 331 resin (the Dow Chemical Co.). Heloxy^{™} 68, Eponex^{™} 1510, and ARALDITE® MV 0500.

### The Comb Polymers

In general the polymers of the present invention are obtainable by reacting aromatic polyepoxides with monofunctional amine-terminated polyethers in excess of aromatic polyepoxides based on equivalence, wherein from about 40% to about 75% of the epoxide groups of the starting material are reacted and the epoxy-to-amine equivalent ratio is any ratio between 1.10:1 to 2.5:1. In one preferred embodiment the ratio of epoxy groups to amino hydrogen atoms (hydrogens attached to a nitrogen atom of a primary amine) in a reactant mixture used to form a dispersant according to the present invention is in the range of between about 1.1:1 to 2.5:1. Such a provision ensures that less than 90% of the epoxy groups in the reactive mixture are reacted, which is especially beneficial when the epoxy component is aromatic to produce a material within this invention.

Thus, it will be seen and recognized by one of ordinary skill in the art that the R₁ group of a dispersant according to the present invention is a hydrocarbyl residue derived from a material as described above.

It is generally preferred that the amine-terminated polyether and glycidyl ether of a polyol are present in such amounts that the amine group of the polyether is able to be consumed by reacting with essentially all of the epoxide functionality of the glycidyl ether. Thus, during the reaction, the amount of amine-terminated polyether is stoichiometrically equal to or greater than the amount of epoxide in the glycidyl ether of a polyol. The resulting product has little if any unreacted epoxide functionality left after the reaction.

Depending on the starting amount used of a primary amine, it is possible to form either a secondary or tertiary amine in the final product. It is therefore possible to form products which contain repeating units where an ATP has reacted with two epoxide groups to form a tertiary amine. This result can be depicted by the following representative formula:

RNHCH₂CHOHCH₂-[-O-A-O-CH₂CHOHCH₂NRCH₂CHOHCH₂-O-]ₓ-A-O-CH₂CHOHCH₂-NRH

in which R represents the capped polyether portion of the ATP; A represents a hydrocarbyl radical, such as the hydrocarbon portion of bisphenol A; and x can vary from 0 (if no tertiary amine present) to about 100. The reaction that forms such products is preferably conducted at any temperature in the range of between about 80°C to about 150°C, under ambient pressure.

Thus it is seen that in one broad respect, this invention is a product formed by reacting a monofunctional, amine-terminated polyether with a glycidyl ether of a polyol. The amine component and the glycidyl ether component may each comprise mixtures of amines and glycidyl ethers, respectively. The amine-terminated polyether provided is generally preferred to be provided in an amount stoichiometrically equal to or greater than the amount of epoxide in the glycidyl ether of a polyol. In one embodiment, up to about 10 percent excess glycidyl ether of a polyol is used.

In another broad respect, this invention comprises a process which comprises contacting a monofunctional, amine-terminated polyether with a glycidyl ether of a polyol. The amine-terminated polyether is used in a stoichiometrically-equivalent or greater amount than the amount of epoxide in the glycidyl ether of a polyol. Likewise, in one embodiment, up to about 10 percent excess glycidyl ether of a polyol is used.

The adduct polymers provided by the present invention can be used as surface active agents in aqueous solutions, hydrocarbons and other organic solvents, depending on which possible composition is used. They are useful in all end use applications and formulations which are known to contain a dispersant as a component.

The reaction of the amine-terminated polyether with the glycidyl ether of a polyol can be conducted with, or without, one or more solvents. In general, the reaction may be conducted with one or both reactants in neat form, in the absence of solvents. If a solvent is used, the solvent should be non-reactive with the amine-terminated polyether, the epoxy resin, or the reaction product of the amine-terminated polyether and the epoxy resin. Representative, non-limiting examples of such solvents include alcohols such as isopropanol, ketones such as methyl isobutyl ketone, and aromatic hydrocarbons such as toluene, and other alcohols, ketones, ethers and hydrocarbons. Water may be also used as a solvent.

The following examples are illustrative of this invention and shall not be construed as being delimitive hereof in any manner. Unless otherwise denoted all parts and percentages are on a weight basis.

### Example 1

A mixture of standard epoxy resin, such as EPON™ 828, available from Resolution Polymers, Inc. or ARALDITE™ 6010, a product of Huntsman Advanced Materials, is mixed with slight molar excess of the ATP, such as JEFFAMINE® M-2070. The resulting mixture is of very low viscosity, forming a clear solution, which is heated up to 100°C for three to four hours. During this time the resulting polymerization of occurs, forming the polyetheralkanolamine and increasing the viscosity build with time. The resulting polymer is a clear, viscous liquid, which dissolves in water. When the solution is agitated, foaming occurs, and remains stable.

Other monofunctional ATP products, such as JEFFAMINE® M-1000 (XTJ-506) and an experimental product, XTJ-580 (500 MW), produce similar products when reacted in similar fashion with the epoxy resins in the above example.

### Example 2

To a small sample vial is added 10 g. (0.04 equivalent mole (amount divided by equivalent weight)) of XTJ-580 (an ATP of 500 MW and having 250 equivalent weight) and 5 g (0.0266 equivalent mole) of EPON 828 (a diglycidyl ether of bisphenol A, having 188 equivalent weight). Equivalent weight for an amine is calculated by dividing the number of active amine hydrogens. This example used a 1.5 ratio of equivalent moles of XTJ-580 to EPON 828. The resulting mixture was mixed to a clear solution, then put in a 50°C oven for 1 hour. After that time, the mixture was still clear and mobile, so was placed in a 100°C oven for 5 hours. A comb-like polyethanolamine formed which was a clear viscous liquid that was soluble in water. The water solution foams slightly on shaking.

### Example 3

To a small vial was added 10 g (0.040 equivalent mole) of XTJ-580 and 6 g (0.0319 equivalent mole) of EPON 828. Upon shaking the two layers went into a clear, water-white solution which was placed in a 100°C oven for three hours. This example used a 1.25 ratio of equivalent moles of XTJ-580 to EPON 828. A comb-like polyethanolamine formed which was completely soluble in water, and which foams slightly on shaking.

### Example 4

To a small vial was added 9 g (0.036 equivalent mole) of XTJ-580 and 6.4 g (0.034 equivalent mole) of EPON 828. Upon shaking the two layers went into a clear, water-white solution which was placed in a 100°C oven for three hours. This example used a 1.06 ratio of equivalent moles of XTJ-580 to EPON 828. The resulting mixture was mixed to a clear solution, and then put in a 100°C oven for 2.5 hours. The product was mostly soluble in water. The mixture was returned to the 100°C oven for an additional 15 hours. The comb-like polyethanolamine was viscous, movable at 100°C, not movable at 20°C, water soluble and produces foaming on shaking.

### Example 5

To a one pint wide-mouth glass container was added 200 g (0.2 equivalent mole) of JEFFAMINE™ M-2070 at 50°C. EPON 828 (30 g, 0.16 equivalent mole) was added at 50°C. The resulting mixture was shaken until homogenous and allowed to heat at 100°C for about six hours, then cooled to room temperature. The resulting polyethanolamine product had total acetylatables of 1.28 milliequivalents/gram, total amine of 0.379 milliequivalents/gram, and a molecular weight of 2009.

### Example 6

To a 500 mL wide mouth bottle was added XTJ-580 (200 g, 0.4 mole equivalent) and HELOXY 65 (184 g, 0.89 mole equivalent) which is a p-tert-butylphenylglycidyl ether. The resulting mixture was stirred into a clear homogeneous solution, tightly capped, and placed in a 50°C oven for one hour. The solution was placed in a 100°C oven for 3.5 hours and then cooled to 85°C for about one hour, before removing from the oven and allowed to cool to room temperature. Analysis of the product showed the following: total acetylatables, 2.29 milliequivalents/gram; total amine, 1.046 milliequivalents/gram; secondary amine, 0.0474 milliequivalents/gram; tertiary amine, 0.9965 milliequivalents/gram; primary amine, 0.003 milliequivalents/gram; viscosity of 1959 cps at 25°C, and an epoxide equivalent weight of 0.0130.

### Example 7

To a small, wide mouth glass bottle was added JEFFAMINE™ M-1000 (XTJ-506, 50 g, 0.1 mole equivalent) and EPON 828 (15 g, 0.08 mole equivalent). The mixture is swirled to a homogeneous off-white solution and placed in a 100°C oven for five hours. The product at 25°C was a soft, waxy semisolid. Analysis of the product showed: total acetylatables, 1.79 milliequivalents/gram; total amine, 0.75 milliequivalents/gram; secondary and tertiary amines, 0.3759 milliequivalents/gram; and tertiary amine, 0.770 milliequivalents/gram. The product was completely water soluble. When shaken the water solution produced a stable foam.

### Example 8

To a small wide mouth bottle was added XTJ-534 (a tert-butyl capped polyether monoamine, 50 g, 0.2 mole equivalent) and EPON 828 (30 g, 0.161 mole equivalent). The resulting mixture was shaken until homogeneous and clear, then placed with a cap into a 100°C oven for four hours. The product is believed to include predominantly molecules composed of 5 parts of epoxy and 6 parts of XTJ-534 (2 parts secondary amine and 4 parts tertiary amine). Analysis of the product showed the following: total acetylatables, 2.44 milliequivalents/gram and total amine, 1.15 milliequivalents/gram.

### Example 9

To a one pint, wide mouth jar was added XTJ-580 (100 g) and EPON 828 (60 g, 0.319 mole equivalent). The resulting mixture is mixed until homogeneous, then placed in a 100°C oven for four hours, then allowed to cool to room temperature. Analysis of the product shows: total acetylatables, 2.4 milliequivalents/gram; hydroxyl number, 137.5; and total amine, and 1.25 milliequivalents/gram.

## Claims

1. A method to provide a water-soluble dispersant having the structure: 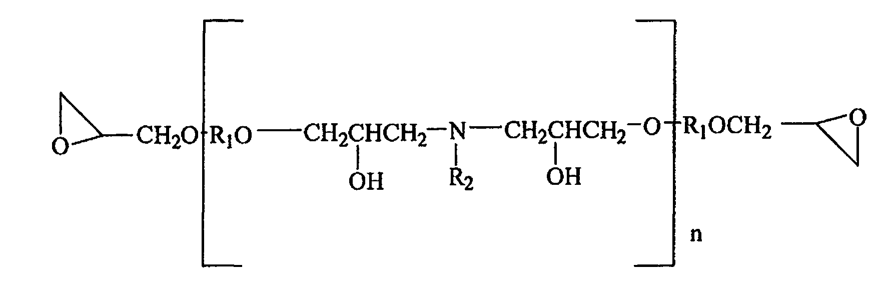 in which R₁ is an aromatic hydrocarbyl group; R₂ being any alkoxylated hydrocarbyl group defined by the structure: 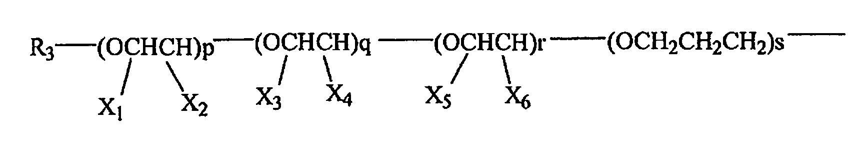 in which R₃ is selected from the group consisting of: hydrogen, and any C₁ to C₂₄ hydrocarbyl group; X₁, X₂, X₃, X₄, X₅, and X₆ in each occurrence are independently selected from the group consisting of: hydrogen, methyl and ethyl, subject to the proviso that at least one of the two X groups that are attached to the same alkoxy unit are hydrogen, p, q, and r may each independently be any integer between zero and 100, including zero, subject to the proviso that at least one of p, q, and r is not zero; n is any integer between 2 and 20; and s may be either 0 or 1,
said water-soluble dispersant is obtained by reacting the primary amine R₂-NH₂ with a polyepoxy of general formula 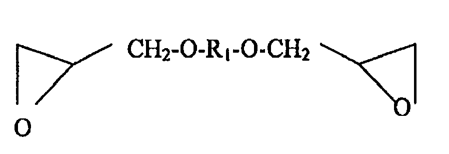 the epoxy-to-amine equivalent ratio being any ratio between 1.10:1 to 2.5:1 and the ratio of epoxy groups to hydrogens attached to the nitrogen atom of the primary amine being in the range of between 1.1 : 1 to 2.5 : 1 and wherein from 40% to 75% of the epoxy groups of the startling material are reacted.

2. A composition of matter which comprises a water-soluble dispersant obtained by a method of claim 1.

3. A composition according to claim 2 further comprising a solvent.

4. A composition according to claim 3 wherein said solvent component comprises water.

5. A composition according to claim 3 wherein said solvent comprises one or more organic solvents selected from the group consisting of: polyhydric alcohols; glycols; diols; glycol esters; glycol ethers; polyalkyl glycols; lower alkyl ethers of polyhydric alcohols; alcohols having fewer than 8 carbon atoms per molecule; ketones; ethers; esters; and lactams.

6. A composition according to claim 3 wherein said solvent comprises one or more organic solvents selected from the group consisting of: ethylene glycol, propylene glycol; butanediol; pentanediol; glycerol; propylene glycol laurate; polyethylene glycol; ethylene glycol monomethyl ether, ethylene glycol mono-ethyl ether; ethylene glycol mono-butyl ether; alcohols having fewer than 8 carbon atoms per molecule such as methanol, ethanol, propanol, iso-propanol; acetone; dioxane; ethyl acetate, propyl acetate, tertiary-butyl acetate and 2-pyrrolidone.

7. A composition according to any of the claims 2 to 6 wherein the amount of said solvent component present is any amount between 50 % and 99 % by weight based on the total weight of said composition.

## Patentansprüche

1. Verfahren zum Bereitstellen eines wasserlöslichen Dispersionsmittels mit der folgenden Struktur: 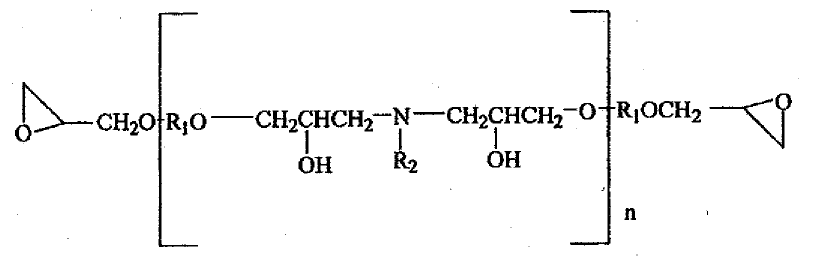 worin R₁ ein aromatischer Kohlenwasserstoffrest ist; R₂ ein alkoxylierter Kohlenwasserstoffrest der nachfolgenden Struktur 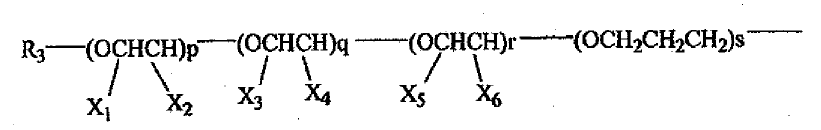 ist, worin R₃ aus der Gruppe ausgewählt ist, bestehend aus: Wasserstoff und irgendeinem C₁-C₂₄-Kohlenwasserstoffrest, X₁, X₂, X₃, X₄, X₅ und X₆ in jedem Fall unabhängig voneinander aus der Gruppe ausgewählt sind, bestehend aus:
Wasserstoff, Methyl und Ethyl, mit der Maßgabe, dass mindestens einer der beiden Reste X, die an die gleiche Alkoxy-Einheit gebunden sind, Wasserstoff ist; p, q und r jeweils unabhängig voneinander eine ganze Zahl von 0 bis 100, einschließlich 0, sein können, mit der Maßgabe, dass mindestens eins von p, q und r nicht 0 ist; n eine ganze Zahl von 2 bis 20 ist; und s entweder 0 oder 1 sein kann;
Wobei das wasserlösliche Dispersionsmittel durch Umsetzen den primären Amins R₂-NH₂ mit einem Polyethoxy der allgemeinen Formel 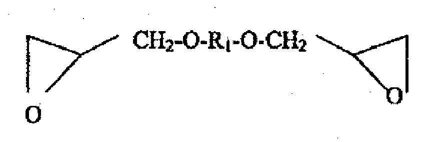
erhalten wird, wobei das Epoxy-Amin-Äquivalentverhältnis irgendein Verhältnis von 1,10:1 bis 2,5:1 ist und das Verhältnis zwischen den Epoxygruppen und den an das Stickstoffatom des primären Amins gebundenen Wasserstoffatomen im Bereich von 1,1:1 bis 2,5:1 liegt, und wobei 40 bis 75 % der Epoxygruppen des Ausgangsmaterials reagiert haben.

2. Materialzusammensetzung,
die ein wasserlösliches Dispersionsmittel aufweist, das nach einem Verfahren nach Anspruch 1 erhalten wurde.

3. Zusammensetzung nach Anspruch 2,
die ferner ein Lösungsmittel aufweist.

4. Zusammensetzung nach Anspruch 3,
wobei die Lösungsmittelkomponente Wasser aufweist.

5. Zusammensetzung nach Anspruch 3,
wobei das Lösungsmittel ein oder mehrere organische Lösungsmittel aufweist, die aus der Gruppe ausgewählt sind, bestehend aus: mehrwertigen Alkoholen; Glycolen; Diolen; Glycolestern; Glycolethern; Polyalkylglycolen; Niederalklyethern von mehrwertigen Alkoholen; Alkoholen mit weniger als 8 Kohlenstoffatomen pro Molekül; Ketonen; Ethern; Estern; und Lactanen.

6. Zusammensetzung nach Anspruch 3,
wobei das Lösungsmittel ein oder mehrere organische Lösungsmittel aufweist, die aus der Gruppe ausgewählt sind, bestehend aus: Ethylenglycol; Propylenglycol; Butandiol; Pentandiol; Glycerol; Propylenglycollaurat; Polyethylenglycol; Ethylenglycolmonomethylether; Ethylenglycolmonoethylether, Ethylenglycolmonobutylether; Alkoholen mit weniger als 8 Kohlenstoffatomen pro Molekül, wie Methanol, Ethanol, Propanol, Isopropanol; Aceton; Dioxan; Ethylacetat, Propylacetat, tert.-Butylacetat und 2-Pyrrolidon.

7. Zusammensetzung nach einem der Ansprüche 2 bis 6,
wobei die vorhandene Menge der Lösungsmittelkomponente irgendeine Menge von 50 bis 99 Gew.-% ist, und zwar auf das Gesamtgewicht der Zusammensetzung bezogen.

## Revendications

1. Procédé pour fournir un dispersant hydrosoluble, ayant la structure : 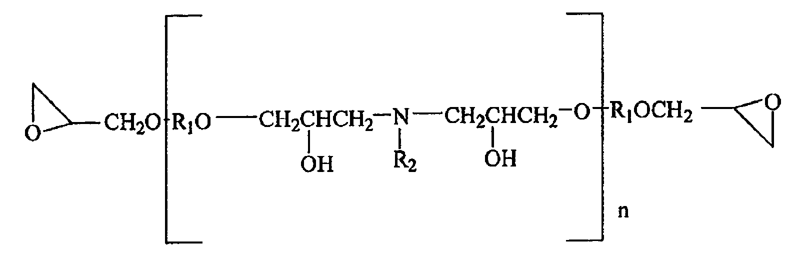 dans laquelle R₁ représente un groupe hydrocarbyle aromatique ; R₂ représentant n'importe quel groupe hydrocarbyle alkoxylé défini par la structure : 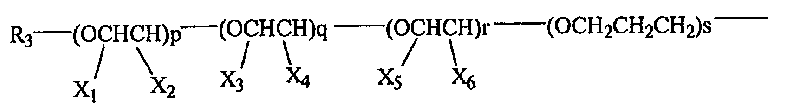 dans laquelle R₃ est choisi dans le groupe consistant en : un atome d'hydrogène et n'importe quel groupe hydrocarbyle en C₁ à C₂₄ ; X₁, X₂, X₃, X₄, X₅ et X₆, à chaque occurrence, sont choisis indépendamment dans le groupe consistant en :
un atome d'hydrogène, des groupes méthyle et éthyle, sous réserve qu'au moins un des deux groupes X qui sont fixés au même motif alkoxy représente un atome d'hydrogène, p, q et r peuvent représenter chacun indépendamment n'importe quel nombre entier entre zéro et 100, y compris zéro, sous réserve qu'au moins un de p, q et r ne soit pas égal à zéro ;
n représente n'importe nombre entier entre 2 et 20 ; et s peut être égal à 0 ou 1,
ledit dispersant hydrosoluble étant obtenu en faisant réagir l'amine primaire R₂-NH₂ avec un polyépoxy de formule générale : 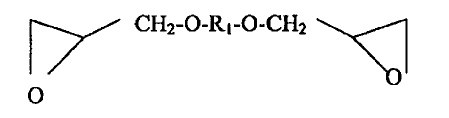 le rapport des équivalents de l'époxy à l'amine étant n'importe quel rapport entre 1,10:1 et 2,5:1 et le rapport des groupes époxy aux atomes d'hydrogène fixés à l'atome d'azote de l'amine primaire étant compris dans l'intervalle entre 1,1:1 et 2,5:1, et dans lequel 40 % à 75 % des groupes époxy de la matière de départ ont réagi.

2. Composition qui comprend un dispersant hydrosoluble obtenu par un procédé de la revendication 1.

3. Composition suivant la revendication 2, comprenant en outre un solvant.

4. Composition suivant la revendication 3, dans laquelle ledit constituant servant de solvant comprend l'eau.

5. Composition suivant la revendication 3, dans laquelle ledit solvant comprend un ou plusieurs solvants organiques choisis dans le groupe consistant en : des alcools polyhydroxyliques ; des glycols ; des diols ; des esters de glycols ; des éthers de glycols ; des polyalkylglycols ; des éthers alkyliques inférieurs d'alcools polyhydroxyliques ; des alcools ayant moins de 8 atomes de carbone par molécule ; des cétones ; des éthers ; des esters ; et des lactames.

6. Composition suivant la revendication 3, dans laquelle ledit solvant comprend un ou plusieurs solvants organiques choisis dans le groupe consistant en :
l'éthylèneglycol, le propylèneglycol ; le butanediol ; le pentanediol ; le glycérol ; le laurate de propylèneglycol ; le polyéthylèneglycol ; l'éther monométhylique d'éthylèneglycol ; l'éther monoéthylique d'éthylèneglycol ; l'éther monobutylique d'éthylèneglycol ; des alcools ayant moins de 8 atomes de carbone par molécule tels le méthanol, l'éthanol, le propanol, l'isopropanol ; l'acétone ; le dioxanne ; l'acétate d'éthyle, l'acétate de propyle, l'acétate de tertiobutyle et la 2-pyrrolidone.

7. Composition suivant l'une quelconque des revendications 2 à 6, dans laquelle la quantité dudit constituant servant de solvant qui est présente est n'importe quelle quantité entre 50 % et 99 % en poids sur la base du poids total de ladite composition.
